# EUROPEAN PATENT APPLICATION

(11) **EP 2 573 987 A1**
(43) Date of publication of application: **27.03.2013**
(21) Application number: 12184269.4
(22) Date of filing: 13.09.2012
(51) Int. Cl.: H04L 12/70

(54) **Method for label distribution in multi-topology**

(30) Priority: 13.09.2011 CN 201110269233
(71) Applicant: Huawei Technologies Co., Ltd., Longgang District, Shenzhen Guangdong 518129 (CN)
(72) Inventor: Chen, Ying, 518129 Shenzhen Guangdong (CN); Zhao, Qianglin, 518129 Shenzhen Guangdong (CN)
(74) Representative: Barth, Stephan Manuel

(57) **Abstract**

The present invention provides a method for label distribution, including: receiving a Label Distribution Protocol packet that contains a first label and is distributed by a downstream node, in which the first label belongs to a downstream logical topology; searching for a second label that corresponds to the first label and belongs to an upstream logical topology, in which the upstream logical topology and the downstream logical topology are different logical topologies; and distributing, when an upstream node belonging to the upstream logical topology exists in a neighboring node, the second label to the upstream node. The present invention also provides a node device. Using the method or device disclosed in the present invention, a label may cross different logical topologies during distribution, so that in a newly established logical topology, it is not necessary to upgrade all common nodes, thereby reducing the cost for establishing the new logical topology.

## Description

### FIELD OF THE INVENTION

The present invention relates to the field of communications, and in particular, to a method and apparatus for label distribution.

### BACKGROUND OF THE INVENTION

With the development of network technologies, a network bears more and more services. To accommodate application demands such as service separation, network multi-topology technologies emerge as required. The network multi-topology technology refers to segmenting multiple logical networks, that is, multiple logical topologies, in a physical network. Different logical topologies are used to bear different services.

In the prior art, the multiprotocol label switching (MPLS) manner is commonly used to transmit data. The MPLS manner is capable of mapping an IP address into a simple label having a fixed length for data transmission. Therefore, a data packet may be exchanged and routed rapidly using the MPLS manner.

The following uses an example to briefly describe the principle of the MPLS. It is assumed that data needs to be sent from a node (for example, a router) A to a node E, and during data transmission, the data needs to pass through a node B, a node C, and a node D in sequence (assumption only, in practice the data may also pass through other nodes). When the data is transmitted from one node to another, a node sending the data is referred to as an upstream node and a node receiving the data is referred to as a downstream node. Before the data is sent, the node E distributes a label for an upstream node (for example, the node D). The label indicates that after receiving the data, the node D needs to forward the data to the node E. Similarly, the downstream nodes all distribute labels to the upstream nodes. After label distribution, data sending (that is, packet forwarding) is able to be performed.

In practice, some node supports one logical topology only (that is, the node is able to be located only in one logical topology) and can be referred to as a common node; some node supports multiple logical topologies (that is, the node is able to be located in multiple logical topologies) and can be referred to as an advanced node. However, according to a label distribution manner in the prior art, after a node receives a label distributed by its downstream nodes, the node only selects one label from the topology to which the label belongs and distributes the label to its upstream node. Therefore, the label distribution can only be performed between nodes supporting the same logical topology.

Therefore, in the prior art, if a new logical topology needs to be established in an original physical network, a node in the new topology needs to support the original logical topology and the new logical topology concurrently. That is, all nodes in the new logical topology must be advanced nodes. If common nodes exist in the new logical topology, all the common nodes need to be upgraded into advanced nodes before the new logical topology is established. The upgrade of the common nodes to the advanced nodes is costly. Therefore, in the prior art, the establishment of a new logical topology is also costly.

### SUMMARY OF THE INVENTION

The objective of the present invention is to provide a method and apparatus for label distribution, which are capable of performing label distribution between different logical topologies, so that in a newly established logical topology, it is not necessary to upgrade all common nodes,and only common nodes located at the edge of the logical topology need to be upgraded to implement the new logical topology, thereby reducing the cost for establishing the new logical topology.

To achieve the objective, the present invention provides the following solutions.

A method for label distribution includes:
receiving a Label Distribution Protocol packet which contains a first label and is distributed by a downstream node; in which the first label belongs to a downstream logical topology;
searching for a second label that corresponds to the first label and belongs to an upstream logical topology; in which the upstream logical topology and the downstream logical topology are different logical topologies; and
distributing, when an upstream node belonging to the upstream logical topology exists in a neighboring node, the second label to the upstream node.

Preferably, the searching for a second label that corresponds to the first label and belongs to an upstream logical topology includes:
determining, according to the Label Distribution Protocol packet, the downstream logical topology to which the first label belongs;
searching for, according to a predetermined mapping relationship between a downstream logical topology and an upstream logical topology, an upstream logical topology that corresponds to the downstream logical topology to which the first label belongs; and
selecting an unused label from labels in the upstream logical topology as the second label.

Preferably, the searching for a second label that corresponds to the first label and belongs to an upstream logical topology includes:
searching for, according to a predetermined mapping relationship between a downstream label and an upstream logical topology, an upstream logical topology corresponding to the first label; and
selecting an unused label from labels in the upstream logical topology as the second label.

A node device includes:
a label receiving unit, configured to receive a Label Distribution Protocol packet which contains a first label and is distributed by a downstream node; in which the first label belongs to a downstream logical topology;
a label search unit, configured to search for a second label that corresponds to the first label and belongs to an upstream logical topology; in which the upstream logical topology and the downstream logical topology are different logical topologies; and
a label distribution unit, configured to distribute, when an upstream node belonging to the upstream logical topology exists in a neighboring node, the second label to the upstream node.

Preferably, the label search unit includes:
a downstream logical topology determination subunit, configured to determine, according to the Label Distribution Protocol packet, the downstream logical topology to which the first label belongs;
a first upstream logical topology determination subunit, configured to search for, according to a predetermined mapping relationship between a downstream logical topology and an upstream logical topology, an upstream logical topology that corresponds to the downstream logical topology to which the first label belongs; and
a second label determination subunit, configured to select an unused label from labels in the upstream logical topology as the second label.

Preferably, the label search unit includes:
a second upstream logical topology determination subunit, configured to search for, according to a predetermined mapping relationship between a downstream label and an upstream logical topology, an upstream logical topology corresponding to the first label; and
a second label determination subunit, configured to select an unused label from labels in the upstream logical topology as the second label.

A packet forwarding method includes:
receiving a data packet which contains a first label and is sent by an upstream node, in which the first label belongs to a first logical topology;
determining a downstream node corresponding to the first label, in which the downstream node belongs to the first logical topology;
searching for an available label switching tunnel when the downstream node is a remote neighboring node, in which the label switching tunnel belongs to a second logical topology different from the first logical topology; and
forwarding the data packet to a neighboring node directly connected to the current node in the label switching tunnel.

Preferably, the searching for an available label switching tunnel includes:
searching for, according to predetermined path information of the label switching tunnel, a label switching tunnel containing the downstream node in the path information.

Preferably, the forwarding the data packet to a neighboring node directly connected to a current node in the label switching tunnel includes:
removing the first label from a stack header of the data packet;
encapsulating a second label into the stack header of the data packet; in which the second label is a label of the first logical topology distributed by the downstream node;
encapsulating a label belonging to the label switching tunnel into the stack header of the data packet; and
forwarding the data packet containing the label of the label switching tunnel to the neighboring node directly connected to the current node in the label switching tunnel.

Preferably, the label switching tunnel is:
established by the downstream node by distributing a label of the second logical topology to a node in the second logical topology when accessing a network.

Preferably, the method further includes:
removing, by the downstream node, after receiving the data packet forwarded by the node in the label switching tunnel, the label belonging to the label switching tunnel from the stack header of the data packet; and
continuing forwarding the data packet according to the second label.

A node device includes:
a packet receiving unit, configured to receive a data packet that contains a first label and is sent by an upstream node; in which the first label belongs to a first logical topology;
a downstream node determination unit, configured to determine a downstream node corresponding to the first label;
a tunnel search unit, configured to search for an available label switching tunnel when the downstream node is a remote neighboring node; in which the label switching tunnel belongs to a second logical topology different from the first logical topology; and
a packet forwarding unit, configured to forward the data packet to a node directly connected to a current node in the label switching tunnel.

Preferably, the tunnel search unit includes:
a path information obtaining subunit, configured to obtain predetermined path information of the label switching tunnel; and
a tunnel search subunit, configured to search for, according to the predetermined path information of the label switching tunnel, a label switching tunnel containing the downstream node in the path information.

Preferably, the data packet forwarding unit includes:
a label removal subunit, configured to remove the first label from a stack header of the data packet;
a first label encapsulation subunit, configured to encapsulate a second label into the stack header of the data packet; in which the second label is a label of the first logical topology distributed by the downstream node;
a second label encapsulation subunit, configured to encapsulate a label of the label switching tunnel into the stack header of the data packet; and
a packet forwarding subunit, configured to forward the data packet containing the label of the label switching tunnel to the node directly connected to the current node in the label switching tunnel.

According to the embodiments of the present invention, the present invention provides the following technical effects:

The method for label distribution disclosed in the present invention is capable of converting a label in a logical topology into a label in another logical topology at the edge of the logical topologies, and therefore capable of distributing the label from an edge node in the logical topology to a node in another logical topology, so that the label can be distributed across different logical topologies. In this manner, in a newly established logical topology, it is not requested to upgrade all common nodes, and only common nodes located at the edge of the logical topologies need to be upgraded to implement the new logical topology, thereby reducing the cost for establishing the new logical topology.

### BRIEF DESCRIPTION OF THE DRAWINGS

To make the technical solutions in the embodiments of the present invention or in the prior art clearer, the accompanying drawings for illustrating the embodiments of the present invention or the prior art are briefly described below. Apparently, the accompanying drawings are for the exemplary purpose only, and persons of ordinary skill in the art may derive other drawings from such accompanying drawings without any creative effort.
FIG. 1 is a flow chart of a method for label distribution according to Embodiment 1 of the present invention;
FIG. 2 is a flow chart of a method for label distribution according to Embodiment 2 of the present invention;
FIG. 3 is a flow chart of a method for label distribution according to Embodiment 3 of the present invention;
FIG. 4 is a structural diagram of a node device according to the present invention;
FIG. 5 is a flow chart of a packet forwarding method according to the present invention;
FIG. 6 is a flow chart of forwarding the data packet to a neighboring node directly connected to a current node in a label switching tunnel according to the present invention; and
FIG. 7 is a structural diagram of another node device according to the present invention.

### DETAILED DESCRIPTION OF THE EMBODIMENTS

The technical solutions in the embodiments of the present invention are clearly and completely described in the following with reference to the accompanying drawings. It is obvious that the embodiments to be described are only a part rather than all of the embodiments of the present invention. All other embodiments obtained by persons of ordinary skill in the art based on the embodiments of the present invention without creative effects shall fall within the protection scope of the present invention.

To make the objective, characteristics, and advantages of the present invention more comprehensible, the following describes the present invention in detail with reference to the accompanying drawings and specific embodiments.

### Embodiment 1

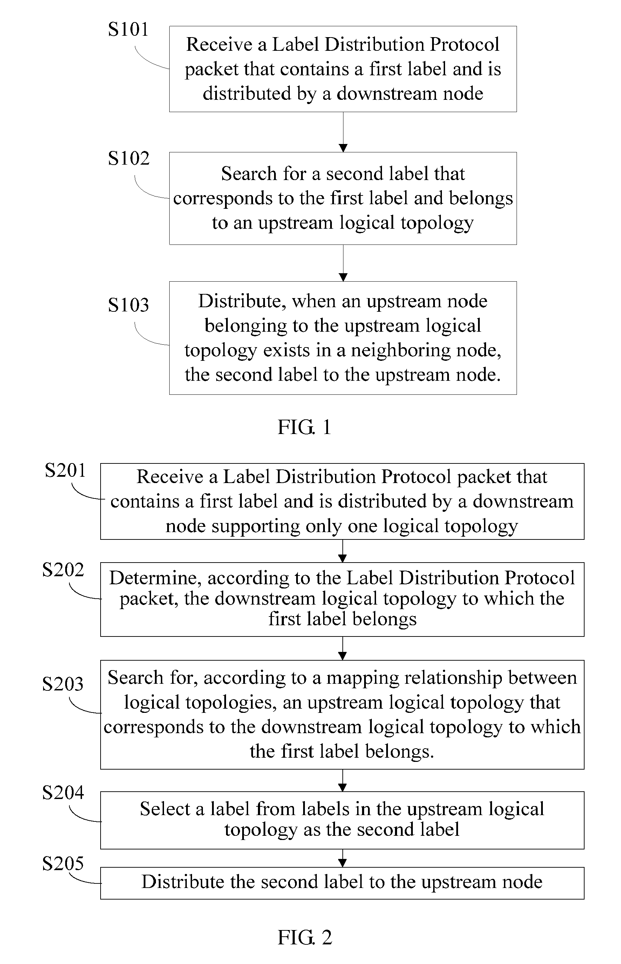

FIG. 1 is a flow chart of a method for label distribution according to Embodiment 1 of the present invention. The execution subject in this embodiment may be a node device located at the edge of a certain logical topology. As shown in FIG. 1, the method includes the following steps.

S101: Receive a Label Distribution Protocol packet that contains a first label and is distributed by a downstream node, in which the first label belongs to a downstream logical topology.

In this embodiment, the execution subject is an intermediate node in a label distribution switching path. Therefore, the downstream node may distribute a label for a current node. The downstream node may be a node supporting one logical topology only (that is, the common node described in BACKGROUND OF THE INVENTION), or a node capable of supporting multiple logical topologies (that is, the advanced node described in BACKGROUND OF THE INVENTION).

One logical topology may contain multiple labels. It is assumed that the logical topology to which the first label belongs in this embodiment is referred to as the downstream logical topology.

S102: Search for a second label that corresponds to the first label and belongs to an upstream logical topology; in which the upstream logical topology and the downstream logical topology are different logical topologies.

The second label that corresponds to the first label and belongs to the upstream logical topology may be determined according to information in a configuration file. Specifically, a conversion relationship between logical topologies may be specified in the configuration file. A user may specify a logical topology where label conversion is required by using the configuration file. When the downstream logical topology is the logical topology specified in the configuration file, the first label is converted into the second label of the upstream logical topology, that is, the label conversion operation is performed on the first label.

For example, a mapping relationship between different logical topologies may be set in the configuration file. After receiving a certain label, the current node first analyzes which logical topology the label belongs to, searches for a logical topology corresponding to the logical topology in the configuration file, and then selects a label from the corresponding logical topology and distributes the label to the upstream node.

S103: Distribute, when an upstream node belonging to the upstream logical topology exists in a neighboring node, the second label to the upstream node.

A neighboring node refers to a node having a neighboring relationship with the current node. Generally, a mapping relationship between the current node and the neighboring node may be stored in the configuration file.

After the second label belonging to the upstream logical topology is determined, it is also necessary to determine whether a node belonging to the upstream logical topology (an upstream node) exists among the nodes having a neighboring relationship with the current node (a neighboring node). Specifically, it may be learned, according to the configuration file, which nodes are contained in the upstream logical topology because the configuration file saves the mapping relationship between the logical topology and the nodes.

The following describes in detail the beneficial effects of the method for label distribution disclosed in the present invention.

In practice, a newly established logical topology generally contains at least two original logical topologies or a part of the two original logical topologies. The method for label distribution disclosed in the present invention may be used for a node at the border of the two original logical topologies. For example, in the two original logical topologies, nodes in one logical topology are common nodes supporting only one logical topology and nodes in the other logical topology are advanced nodes supporting multiple logical topologies. In the prior art, a label is able to be distributed only in the same logical topology. Therefore, a label cannot be distributed from the advanced node to the common node. However, by adopting the method for label distribution disclosed in the present invention, a label distributed from the advanced node may be converted into a label in a logical topology supported by the common node and then distributed to the common node.

In conclusion, the method for label distribution disclosed in the present invention is capable of converting a label in a logical topology into a label in another logical topology at the edge of the logical topology, and therefore capable of distributing the label from an edge node in the logical topology to a node in the other logical topology, so that the label crosses different logical topologies during distribution. In this manner, in a newly established logical topology, it is not necessary to upgrade all common nodes, but instead only common nodes located at the edge of the logical topology need to be upgraded to implement the new logical topology, thereby reducing the cost for establishing the new logical topology.

### Embodiment 2

FIG. 2 is a flow chart of a method for label distribution according to Embodiment 2 of the present invention. In this embodiment, a downstream node is a common node supporting only one logical topology; and an upstream node is an advanced node supporting multiple logical topologies. As shown in FIG. 2, the method includes the following steps.

S201: Receive a Label Distribution Protocol packet that contains a first label and is distributed by a downstream node supporting only one logical topology.

The first label belongs to a downstream logical topology.

S202: Determine, according to the Label Distribution Protocol packet, a downstream logical topology to which the first label belongs.

Because the Label Distribution Protocol packet contains information about the logical topology to which the first label belongs (it is defined in the existing protocol that in the Label Distribution Protocol packet, an MT-ID TLV (Multiple Topology Identification Type Length Value, that is "the type length value carrying multiple topology identification) field may be used to indicate to which logical topology the label carried in the packet belongs), the downstream logical topology to which the first label belongs may be determined according to the Label Distribution Protocol packet.

S203: Search for, according to a predetermined mapping relationship between a downstream logical topology and an upstream logical topology, an upstream logical topology that corresponds to the downstream logical topology to which the first label belongs.

In this embodiment, a mapping relationship between different logical topologies may be stored in a configuration file. A user may configure the mapping relationship between logical topologies in the configuration file. The node adopting the method for label distribution disclosed in the present invention can search the configuration file for the upstream logical topology corresponding to the downstream logical topology. For example, if the received first label is a label of a logical topology C (that is, the downstream logical topology), and in the configuration file, a logical topology D corresponds to the logical topology C, the logical topology D is determined as the upstream logical topology.

S204: Select a label from labels in the upstream logical topology as the second label.

The function of a label is to enable a certain node to learn which node the data needs to be sent to after the data is received from an upstream node. For example, if a node D in the downstream logical topology distributes a label having a value 1 to a node C in the upstream logical topology, and after receiving data sent by the upstream node, the node C may add the label having the value 1 to the data and send the data to the node D. The node D then sends the data to a route indicated by the label having the value 1. It is assumed that the logical topology to which the node D belongs further includes a label 2, a label 3, a label 4, and so on, the node D may also distribute the label 2, the label 3, or the label 4 to the node C during label distribution as long as the label distributed by the node D to the node C is a label in the logical topology supported by the node C.

Therefore, in this embodiment, in step S204, a label needs to be selected from the labels in the upstream logical topology as the second label.

S205: Distribute the second label to the upstream node.

In the embodiment involved in this solution, it is defaulted that an upstream node belonging to the upstream logical topology exists in a neighboring node of the current node.

The downstream node in this embodiment is a common node supporting only one logical topology, and the upstream node in this embodiment is an advanced node supporting multiple logical topologies. Therefore, this embodiment discloses a specific method for distributing a label from a common node to an advanced node.

### Embodiment 3

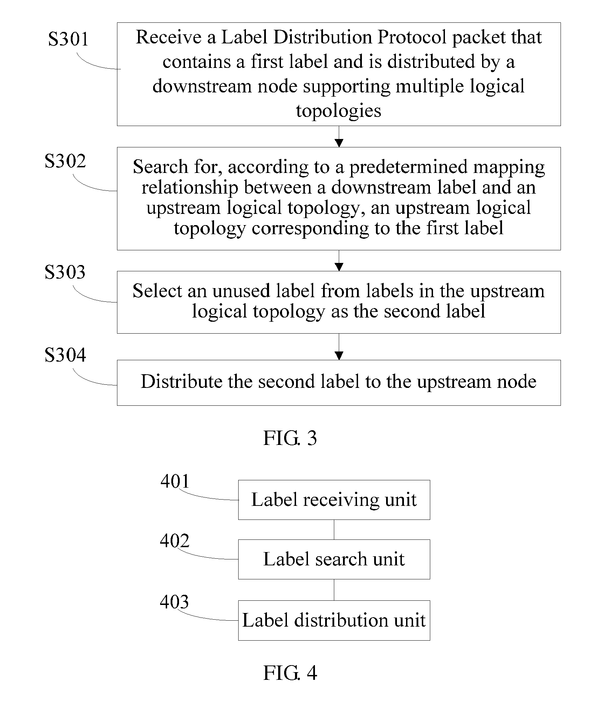

FIG. 3 is a flow chart of a method for label distribution according to Embodiment 3 of the present invention. In this embodiment, a downstream node is an advanced node supporting multiple logical topologies; and an upstream node is a common node supporting only one logical topology. As shown in FIG. 3, the method includes the following steps.

S301: Receive a Label Distribution Protocol packet that contains a first label and is distributed by a downstream node supporting multiple logical topologies.

The first label belongs to a downstream logical topology.

S302: Search for, according to a predetermined mapping relationship between a downstream label and an upstream logical topology, an upstream logical topology corresponding to the first label.

In this embodiment, the mapping relationship between a label and a logical topology may be stored in a configuration file. Specifically, for example, the configuration file stores the following mapping relationship: Label "1" corresponds to a logical topology B. In this case, it may be determined, according to the received label "1" (that is, the first label), that the logical topology corresponding to the label is the logical topology B (that is, the upstream logical topology).

S303: Select an unused label from labels in the upstream logical topology as the second label.

S304: Distribute the second label to the upstream node.

The upstream node in this embodiment is a common node supporting only one logical topology, and the downstream node in this embodiment is an advanced node supporting multiple logical topologies. Therefore, this embodiment discloses a specific method for distributing a label from an advanced node to a common node.

It should be noted that, the method for label distribution provided in the embodiments of the present invention are applicable to all scenarios where label distribution needs to be performed between different logical topologies, but not limited to the upstream node and the downstream node described in the preceding embodiments.

The present invention further discloses a node device. FIG. 4 is a structural diagram of a node device according to the present invention. As shown in FIG. 4, the node device includes:
a label receiving unit 401, configured to receive a Label Distribution Protocol packet that contains a first label and is distributed by a downstream node, in which the first label belongs to a downstream logical topology;
a label search unit 402, configured to search for a second label that corresponds to the first label and belongs to an upstream logical topology, in which the upstream logical topology and the downstream logical topology are different logical topologies; and
a label distribution unit 403, configured to distribute, when an upstream node belonging to the upstream logical topology exists in a neighboring node, the second label to the upstream node.

For example, in practice, the label search unit 402 may include:
a downstream logical topology determination subunit, configured to determine, according to the Label Distribution Protocol packet, the downstream logical topology to which the first label belongs;
a first upstream logical topology determination subunit, configured to search for, according to a predetermined mapping relationship between a downstream logical topology and an upstream logical topology, an upstream logical topology that corresponds to the downstream logical topology to which the first label belongs; and
a second label determination subunit, configured to select an unused label from labels in the upstream logical topology as the second label.

In another example, the label search unit 402 may include:
a second upstream logical topology determination subunit, configured to search for, according to a predetermined mapping relationship between a downstream label and an upstream logical topology, an upstream logical topology corresponding to the first label; and
a second label determination subunit, configured to select an unused label from labels in the upstream logical topology as the second label.

In conclusion, the node device disclosed in the present invention is capable of converting a label in a logical topology into a label in another logical topology at the edge of a logical topology, and therefore capable of distributing the label from an edge node in the logical topology to a node in another logical topology so that the label crosses different logical topologies during distribution. In this manner, in a newly established logical topology, it is not necessary to upgrade all common nodes, but instead only common nodes located at the edge of the logical topology need to be upgraded to implement the new logical topology, thereby reducing the cost for establishing the new logical topology.

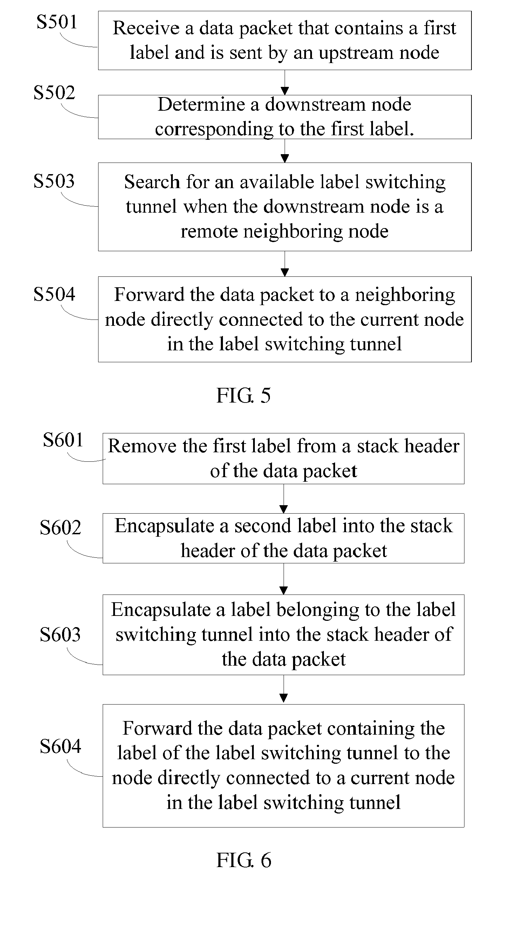

The present invention further discloses a packet forwarding method. FIG. 5 is a flow chart of a packet forwarding method according to the present invention. As shown in FIG. 5, the method includes the following steps.

S501: Receive a data packet that contains a first label and is sent by an upstream node; in which the first label belongs to a first logical topology.

The direction of packet forwarding is reverse to that of label distribution. The data packet is forwarded from an upstream node to a downstream node.

S502: Determine a downstream node corresponding to the first label.

The downstream node that needs to receive the data packet may be determined according to a label switching path containing the first label.

In the label switching path, it is specified to which downstream node the data packet is to be sent after the first label is received.

S503: Search for an available label switching tunnel when the downstream node is a remote neighboring node; in which the label switching tunnel belongs to a second logical topology different from the first logical topology.

A remote neighboring node refers to a node not directly connected to a current node. During packet forwarding, data is only able to be forwarded between directly connected nodes. Therefore, when the downstream node corresponding to the first label is not directly connected to the current node, packet forwarding cannot be directly performed.

The available label switching tunnel may be formed by multiple nodes. The nodes in the label switching tunnel belong to the second logical topology. The second logical topology is different from the first logical topology. The nodes in the label switching tunnel only support the labels in the second logical topology, but do not support the labels in the first logical topology.

In addition, the available label switching tunnel has nodes directly connected to the current node, and further has the nodes directly connected to the downstream node corresponding to the first label.

S504: Forward the data packet to a neighboring node directly connected to the current node in the label switching tunnel.

It should be noted that the execution subject in this embodiment is a node at the edge of the first logical topology and capable of supporting multiple logical topologies. In step S504, the node needs to forward the packet to a node in the label switching tunnel. Therefore, the node supports (belongs to) both the first logical topology and the second logical topology at the same time. Similarly, in this embodiment, the downstream node corresponding to the first label may also support multiple logical topologies, for example, belong to both the first logical topology and the second logical topology at the same time.

FIG. 6 is a flow chart of forwarding the data packet to a neighboring node directly connected to a current node in a label switching tunnel in S504. As shown in FIG. 6, the process may include the following steps.

S601: Remove the first label from a stack header of the data packet.

S602: Encapsulate a second label into the stack header of the data packet; in which the second label is a label of the first logical topology distributed by the downstream node.

The second label and the first label both belong to the first logical topology. Therefore, the label switching method described in steps S601 and S602 is for forwarding a packet in the same logical topology in the prior art.

S603: Encapsulate a label belonging to the label switching tunnel into the stack header of the data packet.

The following describes the function of the encapsulated label in the packet forwarding process. In an MPLS manner, label encapsulation and removal operations are a method of label distribution. During the stack encapsulation operation, the label of the label switching tunnel may be encapsulated into the packet header of a data packet. In this case, the second label is located at the inner layer of the data packet, and the label of the label switching tunnel is located at the outer layer of the data packet.

The process of packet forwarding by a node is reverse to that of label distribution. The node only performs the packet forwarding according to the node at the outermost layer. When the downstream node corresponding to the first label receives the data packet forwarded by the node in the label switching tunnel and needs to continue forwarding the packet, the node may perform the removal operation on the packet (that is, the data packet) to remove the label of the label switching tunnel located at the outer layer.

It should be noted that in the process that the node in the label switching tunnel performs packet forwarding according to the label of the label switching channel at the outer layer, a label switching manner may also be adopted. When the downstream node corresponding to the first label receives the data packet forwarded by the node in the label switching tunnel, the outer-layer label of the data packet definitely belongs to the logical topology to which the node in the label switching tunnel belongs. However, the outer-layer label may not be the same as the label encapsulated into the stack header of the data packet in step S603.

After the label of the label switching tunnel at the outer layer is removed, the second label becomes the label located at the outer layer of the packet. The downstream node corresponding to the first label may continue forwarding the data packet according to the second label.

S604: Forward the data packet containing the label of the label switching tunnel to the node directly connected to a current node in the label switching tunnel.

According to the packet forwarding method disclosed in the present invention, during packet forwarding, when the downstream node corresponding to the first label is not directly connected to the current node, the label switching tunnel directly connected to the current node is used for packet forwarding. Because the logical topology to which the first label belongs is different from that to which the label switching tunnel belongs, by adopting the packet forwarding method disclosed in the present invention, a packet is able to be forwarded across logical topologies.

In practice, in step S502, the searching an available label switching tunnel may further include:
searching for, according to predetermined path information of the label switching tunnel, a label switching tunnel containing the downstream node in the path information.

The label switching tunnel in this solution may also be set by a user. Specifically, a corresponding downstream node may be configured so that the downstream node, when accessing the network, establishes a label switching tunnel by distributing a label of the second logical topology to a node in the second logical topology. The other end of the label switching tunnel may be the node receiving the data packet that contains the first label and is sent by the upstream node, that is, the execution subject in this solution.

The downstream node, after receiving the data packet forwarded by the node in the label switching tunnel, may perform the following operations:
removing the label belonging to the label switching tunnel from the stack header of the data packet; and
continuing forwarding the data packet according to the second label.

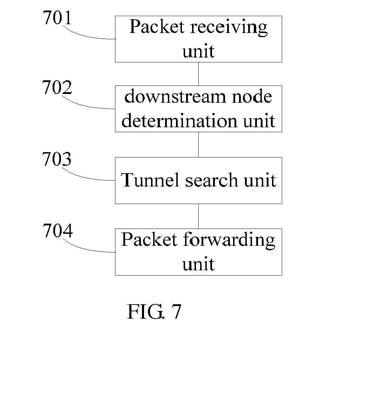

The present invention further discloses a node device. FIG. 7 is a structural diagram of another node device according to the present invention. As shown in FIG. 7, the device includes:
a packet receiving unit 701, configured to receive a data packet that contains a first label and is sent by an upstream node, in which the first label belongs to a first logical topology;
a downstream node determination unit 702, configured to determine a downstream node corresponding to the first label;
a tunnel search unit 703, configured to search for an available label switching tunnel when the downstream node is a remote neighboring node; in which the label switching tunnel belongs to a second logical topology different from the first logical topology; and
a packet forwarding unit 704, configured to forward the data packet to a node directly connected to a current node in the label switching tunnel.

In practice, the tunnel search unit 703 may further include:
a path information obtaining subunit, configured to obtain predetermined path information of the label switching tunnel; and
a tunnel search subunit, configured to search for, according to the predetermined path information of the label switching tunnel, a label switching tunnel containing the downstream node in the path information.

The packet forwarding unit 704 may further include:
a label removal subunit, configured to remove the first label from a stack header of the data packet;
a first label encapsulation subunit, configured to encapsulate a second label into the stack header of the data packet; in which the second label is a label of the first logical topology distributed by the downstream node;
a second label encapsulation subunit, configured to encapsulate a label of the label switching tunnel into the stack header of the data packet; and
a packet forwarding subunit, configured to forward the data packet containing the label of the label switching tunnel to the node directly connected to the current node in the label switching tunnel.

In this specification, the embodiments are described progressively. Each embodiment emphasizes a difference from other embodiments and the same and similar parts in the embodiments may be cross-referenced. The system disclosed in the embodiment corresponds to the method disclosed in the embodiments. Therefore, the system is briefly described, and for related parts, reference may be made to the description in the method embodiments.

The principle and implementation of the present invention are described herein through specific examples. The description about the embodiments of the present invention is merely provided for ease of understanding of the method and core ideas of the present invention. Persons of ordinary skill in the art can make variations and modifications to the present invention in terms of the specific implementations and application scopes according to the ideas of the present invention. Therefore, the specification shall not be construed as a limit to the present invention.

## Claims

1. A method for label distribution, comprising:
receiving a Label Distribution Protocol packet that contains a first label and is distributed by a downstream node, wherein the first label belongs to a downstream logical topology;
searching for a second label that corresponds to the first label and belongs to an upstream logical topology, wherein the upstream logical topology and the downstream logical topology are different logical topologies; and
distributing, when an upstream node belonging to the upstream logical topology exists in a neighboring node, the second label to the upstream node.

2. The method according to claim 1, wherein the searching for a second label that corresponds to the first label and belongs to an upstream logical topology comprises:
determining, according to the Label Distribution Protocol packet, the downstream logical topology to which the first label belongs;
searching for, according to a predetermined mapping relationship between a downstream logical topology and an upstream logical topology, an upstream logical topology that corresponds to the downstream logical topology to which the first label belongs; and
selecting an unused label from labels in the upstream logical topology as the second label.

3. The method according to claim 1, wherein the searching for a second label that corresponds to the first label and belongs to an upstream logical topology comprises:
searching for, according to a predetermined mapping relationship between a downstream label and an upstream logical topology, an upstream logical topology corresponding to the first label; and
selecting an unused label from labels in the upstream logical topology as the second label.

4. A node device, comprising:
a label receiving unit, configured to receive a Label Distribution Protocol packet that contains a first label and is distributed by a downstream node, wherein the first label belongs to a downstream logical topology;
a label search unit, configured to search for a second label that corresponds to the first label and belongs to an upstream logical topology, wherein the upstream logical topology and the downstream logical topology are different logical topologies; and
a label distribution unit, configured to distribute, when an upstream node belonging to the upstream logical topology exists in a neighboring node, the second label to the upstream node.

5. The node device according to claim 4, wherein the label search unit comprises:
a downstream logical topology determination subunit, configured to determine, according to the Label Distribution Protocol packet, the downstream logical topology to which the first label belongs;
a first upstream logical topology determination subunit, configured to search for, according to a predetermined mapping relationship between a downstream logical topology and an upstream logical topology, an upstream logical topology that corresponds to the downstream logical topology to which the first label belongs; and
a second label determination subunit, configured to select an unused label from labels in the upstream logical topology as the second label.

6. The node device according to claim 4, wherein the label search unit comprises:
a second upstream logical topology determination subunit, configured to search for, according to a predetermined mapping relationship between a downstream label and an upstream logical topology, an upstream logical topology corresponding to the first label; and
a second label determination subunit, configured to select an unused label from labels in the upstream logical topology as the second label.

7. A packet forwarding method, comprising:
receiving a data packet that contains a first label and is sent by an upstream node, wherein the first label belongs to a first logical topology;
determining a downstream node corresponding to the first label, wherein the downstream node belongs to the first logical topology;
searching for an available label switching tunnel when the downstream node is a remote neighboring node, wherein the label switching tunnel belongs to a second logical topology different from the first logical topology; and
forwarding the data packet to a neighboring node directly connected to a current node in the label switching tunnel.

8. The method according to claim 7, wherein the searching for an available label switching tunnel comprises:
searching for, according to predetermined path information of the label switching tunnel, a label switching tunnel containing the downstream node in the path information.

9. The method according to claim 7, wherein the forwarding the data packet to a neighboring node directly connected to a current node in the label switching tunnel comprises:
removing the first label from a stack header of the data packet;
encapsulating a second label into the stack header of the data packet; wherein the second label is a label of the first logical topology distributed by the downstream node;
encapsulating a label belonging to the label switching tunnel into the stack header of the data packet; and
forwarding the data packet containing the label of the label switching tunnel to the neighboring node directly connected to the current node in the label switching tunnel.

10. The method according to claim 7, wherein the label switching tunnel is established by the downstream node by distributing a label of the second logical topology to a node in the second logical topology in advance.

11. The method according to claim 9, further comprising:
removing, by the downstream node, after receiving the data packet forwarded by a node in the label switching tunnel, the label belonging to the label switching tunnel from the stack header of the data packet; and
continuing forwarding the data packet according to the second label.

12. A node device, comprising:
a packet receiving unit, configured to receive a data packet that contains a first label and is sent by an upstream node, wherein the first label belongs to a first logical topology;
a downstream node determination unit, configured to determine a downstream node corresponding to the first label;
a tunnel search unit, configured to search for an available label switching tunnel when the downstream node is a remote neighboring node, wherein the label switching tunnel belongs to a second logical topology different from the first logical topology; and
a packet forwarding unit, configured to forward the data packet to a node directly connected to a current node in the label switching tunnel.

13. The node device according to claim 12, wherein the tunnel search unit comprises:
a path information obtaining subunit, configured to obtain predetermined path information of the label switching tunnel; and
a tunnel search subunit, configured to search for, according to the predetermined path information of the label switching tunnel, a label switching tunnel containing the downstream node in the path information.

14. The node device according to claim 12, wherein the packet forwarding unit comprises:
a label removal subunit, configured to remove the first label from a stack header of the data packet;
a first label encapsulation subunit, configured to encapsulate a second label into the stack header of the data packet; wherein the second label is a label of the first logical topology distributed by the downstream node;
a second label encapsulation subunit, configured to encapsulate a label of the label switching tunnel into the stack header of the data packet; and
a packet forwarding subunit, configured to forward the data packet containing the label of the label switching tunnel to a node directly connected to the current node in the label switching tunnel.
